# EUROPÄISCHE PATENTANMELDUNG

(11) **EP 1 245 882 A2**
(43) Veröffentlichungstag der Anmeldung: **02.10.2002**
(21) Anmeldenummer: 02005103.3
(22) Anmeldetag: 07.03.2002
(51) Int. Cl.: F16K 15/20

(54) **Reifenventil für die Felge eines Luftreifens an einem Fahrzeug**

(30) Priorität: 26.03.2001 DE 20105319 U; 18.05.2001 DE 20108389 U
(71) Anmelder: Alligator Ventilfabrik GmbH, D-89537 Giengen (DE)
(72) Erfinder: Gabelmann, Volker, Dipl.-Ing., 89168 Niederstotzingen (DE)
(74) Vertreter: Hiebsch, Gerhard F., Dipl.-Ing.

(57) **Zusammenfassung**

Bei einem Reifenventil für die Felge (10) eines Luftreifens an einem Fahrzeug mit einem Ventilkörper (14) aus einem starren Werkstoff sowie mit einem Ventileinsatz (60) und in Abstand zu diesem vorgesehenem Luftauslass (51) eines Strömungsweges (48, 50), ist in dem Ventilkörper (14) ein den Strömungsweg (48, 50) enthaltender Kolben oder Schieber (44) beweglich gelagert und der Strömungsweg (48, 50) einends wahlweise mit einem von zumindest zwei am Ventilkörper (14) vorgesehenen Luftauslässen (62, 64) verbindbar ausgebildet. Der aus starrem Werkstoff -- insbesondere aus einem metallischen Werkstoff -- bestehende becherartige Ventilkörper (14) weist eine Wandung (16) und eine Bodenplatte (17) auf. Zudem soll der Kolben (44) mit dem Ventileinsatz (60) versehen sein.

## Beschreibung

Die Erfindung betrifft ein Reifenventil für die Felge eines Luftreifens an einem Fahrzeug mit einem Ventilkörper aus einem starren Werkstoff sowie mit einem Ventileinsatz und in Abstand zu diesem vorgesehenem Luftauslass eines Strömungsweges.

Ein solches Reifenventil ist der Schrift zu DE 200 15 467 U1 zu entnehmen. Bei diesem ist der eine Längsbohrung enthaltende Ventilkörper mit einer koaxialen Ventilhülse aus starrem Werkstoff -- insbesondere aus einem metallischen Werkstoff -- durch ein Zwischenrohr in Abstand verbunden und die Ventilhülse zur Längsachse des Reifenventils begrenzt neigbar. Das Zwischenrohr liegt einends einem Hohlschaft des Ventilkörpers klemmend an und umgibt andernends den in Abstand benachbarten Endbereich der Ventilhülse. Die Mündung jener Längsbohrung ist an einem eine Ringschulter achswärts begrenzenden Kopfrohr eines Hohlschaftes angeordnet. Der Ventilkörper wird zumindest partiell von einer Schraubhülse umgeben, die in radialem Abstand zu einem Außenwulst des Hohlschaftes verläuft sowie mit diesem eine Klemmpaarung für das Zwischenrohr bildet. Zwischen der Ringschulter eines einends vorgesehenen Ventilfußes und der gegenüberstehenden Unterkante der Schraubhülse erstreckt sich ein Ring aus elastischem Werkstoff als Anlageorgan für die Felge; zwischen der Unterkante der Schraubhülse und dem elastischen Ring ist eine Ringscheibe aus starrem Werkstoff vorgesehen.

In der EP 0 751 017 B1 der Anmelderin wird ein Reifenventil beschrieben, dessen metallischer Ventilkörper einen Ventileinsatz enthält und in Abstand zur Felge an einer Ventilkappe endet. Dank eines Außengewindes kann der Ventilkörper eine Schraubhülse aufnehmen, zwischen der und jener Ringschulter des angeformten Ventilfußes die Felge eingeklemmt wird. Dieses Reifenventil endet innerhalb der Felge in einem Signalgehäuse, das zwei Fußelemente zum Aufsetzen auf das Felgenbett sowie zum einstellbaren Lagern in montiertem Zustand aufweist. Als Verbindungselement zwischen Reifenventil und Signalgehäuse dient eine hohl ausgebildete, in die Ventilbohrung des -- mit der Ringschulter einem Sitz im Signalgehäuse anliegenden -- Reifenventils eingreifende Schraube, deren Kopf sich an die ventilferne Seite einer von ihr mit Spiel durchgriffenen Längswand des Signalgehäuses anlegt.

Im Nutzfahrzeugbereich wird nach einem brauchbaren Ersatz für die Zwillingsbereifung an der Antriebsachse gesucht, beispielsweise durch den Einsatz sog. "SuperSingle"-Reifen. In diesem Reifen soll das Notlaufsystem ein ebenfalls luftbefüllter Sicherheitsschlauch installiert sein, dank dessen bei einem Reifendefekt das Weiterfahren auf diesem Sicherheitssystem möglich bleibt. Somit wird die Befüllung zweier getrennter Luftvolumina erforderlich.

In Kenntnis dieses Standes der Technik hat sich der Erfinder das Ziel gesetzt, ein Reifenventil der eingangs genannten Art so zu gestalten, dass es mehr als ein Luftvolumen zu erreichen vermag; es soll bei den erwähnten "SuperSingle"-Reifen mit Sicherheitsschlauch eingesetzt werden können.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist in dem -- bevorzugt eine Wandung und eine Bodenplatte aufweisenden becherähnlichen, aus starrem Werkstoff, insbesondere aus einem metallischen Werkstoff, gefertigten -- Ventilkörper ein den Strömungsweg enthaltender und mit dem Ventileinsatz versehener Kolben oder Schieber beweglich gelagert und der Strömungsweg einends wahlweise mit einem von zumindest zwei am Ventilkörper vorgesehenen Luftauslässen verbindbar ausgebildet.

Nach einem weiteren Merkmal der Erfindung ist jeder der Luftauslässe in einem gesondert abgedichteten Bereich des Innenraumes des Ventilkörpers angeordnet, und die Mündung des kolbenseitigen Strömungsweges wird dank der Relativbewegung zwischen Kolben und Ventilkörper wahlweise einem der Bereiche zugeordnet. Dazu hat es sich als günstig erwiesen, aus dem Kolben oder Schieber einerseits sowie dem ihn umgebenden Ventilkörper anderseits einen zur Kolbenachse parallelen Spaltraum zu bilden, der durch -- quer zur Bewegungsrichtung des Kolbens angeordnete -- Dichtungselemente in die einzelnen Bereiche für die Luftauslässe unterteilt wird. Die Dichtungselemente sind bevorzugt in Nuten der Innenfläche der Wandung des Ventilkörpers in axialem Abstand zueinander eingefügte und von dieser abragende 0-Ringe, an denen die -- die Mündung des Strömungsweges enthaltende -- Umfangsfläche des Kolbens tangierend bzw. sich anschmiegend entlanggeführt wird, wobei jene Mündung des Strömungsweges innerhalb des Ventilkörpers verfahren wird.

Die Wandung des Ventilkörpers wird bevorzugt querschnittlich oval oder zylindrisch gestaltet, und die Form des Kolbens -- zumindest von dessen den Dichtungselementen oder 0-Ringen zugeordneten Abschnitt -- wird jenem ihn umfangenden Querschnitt angepasst; der Kolben kann erfindungsgemäß einen dem Querschnitt des Ventilkörpers angepassten Kolbenkörper aufweisen sowie ein von diesem axial abragendes -den Ventileinsatz enthaltendes -- Axialrohr kleineren Querschnittes.

Der Strömungsweg des Kolbens oder Schiebers soll durch den Innenraum des Axialrohres -- als sich im Kolbenkörper fortsetzender und zu dessen Bodenfläche hin geschlossener axialer Rohrkanal des am freien Ende mit dem Ventileinsatz ausgestatteten Axialrohres -- sowie einer von diesem Rohrkanal ausgehenden Radialbohrung gebildet werden.

Um zwischen dem Kolben- bzw. dem Kolbenkörperboden sowie einer mit der Wandung des Ventilkörpers einstückigen Bodenplatte stets Abstand zu halten, soll von der Bodenplatte innenseitig wenigstens ein Anschlagorgan für die Bodenfläche des Kolbens bzw. des Kolbenkörpers aufragen, das allerdings von verhältnismäßig geringer Höhe ist.

Als günstig hat es sich erwiesen, dass in einer Endstellung -- bei dem Anschlagorgan aufsitzender Bodenfläche des Kolbens bzw. des Kolbenkörpers -- der von dieser Bodenfläche und der Bodenplatte begrenzte Bodenraum mit dem anschließenden Bereich des Spaltraums eine Einheit bildet, die napfartig einen Teil des Kolbenkörpers umgibt. In dieser Endstellung des Kolbens bzw. Kolbenkörpers soll im übrigen die Mündung des Strömungsweges aus Rohrkanal und Radialbohrung mit einem bodennahen Luftauslass oder Ausgang fluchten, der an einen Sicherheitsschlauch angeschlossen wird.

Im Rahmen der Erfindung liegt es auch, dass bei einer anderen Stellung des Kolbens sich der Kolbenkörper in Abstand zum Anschlagorgan befindet sowie die Mündung des Strömungsweges aus Rohrkanal und Radialbohrung in einem anderen Bereich des Spaltraumes einem Luftdurchlass gegenüberliegt, der mit dem Reifeninnenraum verbunden ist; an den Luftdurchlass ist eine Einrichtung zur Reifendrucküberwachung angeschlossen, wie sie beispielsweise der DE 296 23 466 der Anmelderin zu entnehmen ist.

Der Einstellung des Kolbenkörpers dient ein auf seiner Kopffläche aufsitzender Kraftspeicher, der sich andernends an einer feststehenden Gegenfläche abstützt. Insbesondere kann als Kraftspeicher eine Schraubenfeder das Axialrohr umfangen, die andernends in einem Aufnahmeraum einer Spannmutter lagert. Die Gegenfläche bzw. die Spannmutter wird durch ein Innengewinde des Ventilkörpers in dessen Innenraum gehalten, und der Abstand der Spannmutter von der Bodenplatte des Ventilkörpers ist einstellbar ausgebildet.

Nach einem weiteren Merkmal der Erfindung ist am Ventilkörpers ein Außengewinde für eine Außenmutter vorhanden, die mit einem radial abragenden Wulstkörper des Ventilkörpers eine Klemmeinrichtung zu dessen Festlegung an der erwähnten Felge bildet. Dieser Wulstkörper soll eine radiale Anschlagfläche anbieten, die ein zur Außenmutter gerichtetes Dichtelement -- bevorzugt ein O-Ring --, enthält.

Durch diese Erfindung wird sichergestellt, dass stets zuerst der Sicherheitsschlauch gefüllt wird. Der untere Ausgang ist über eine flexible Verbindung mit dem eigentlichen Sicherheitsschlauch verbunden und wird somit beim Aufpumpen gefüllt. Sobald ein gewisser Druck -- beispielsweise 9,5 Bar -- erreicht ist, wird der Kolben gegen die Federkraft in die obere Lage bewegt und der Luftdurchlass zum Reifen hin geöffnet.

Im Reifen, also etwa im erörterten "SuperSingle"-Reifen, können beliebige Luftdrücke eingestellt werden. Sobald der Luftdruck in dem Sicherheitsschlauch unter dem genannten vorgegebenen Wert sinkt, schaltet das Ventil auf die Verbindungslage zum Sicherheitsschlauch um, so dass beim Nachfüllen in jedem Falle zunächst dieser auf den vorgeschriebenen Druckwert aufgefüllt wird und erst dann der "SuperSingle".

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: einen Längsschnitt durch ein erfindungsgemäßes Reifenventil;
- Fig. 2:: einen vergrößerten Ausschnitt aus Fig. 1;
- Fig. 3:: einen Teil des Reifenventils in einer gegenüber Fig. 1 geänderten Betriebsstellung.

An einer Felge 10 eines nicht wiedergegebenen Kraftfahrzeugreifens ist ein -- einen Durchbruch 11 durchgreifendes -- Reifenventil 12 mit becherartigem Ventilkörper 14 der Länge a festgelegt; dessen Innenraum 20 des Innendurchmessers d wird von einer zylindrischen Wandung 16 der Dicke b und einer damit einstückigen Bodenplatte 17 begrenzt. Von dieser ragt in der Zylinderachse A ein Anschlagzapfen 18 geringer Höhe e auf.

Vom -- beidseits angefasten -- Mündungsrand 15 des Ventilkörpers 14 bzw. seiner Wandung 16 geht in dieser ein Innengewinde 22 aus, dessen Länge f etwas größer ist als die halbe Ventilkörperlänge a. Zudem ist in die Wandung 16 ein Außengewinde 24 eingefügt, das sich zwischen dem Mündungsrand 15 sowie einer von der Wandung 16 radial abragenden Anschlagfläche 26 erstreckt; letzere verläuft zum Mündungsrand 15 in Abstand i, der etwa zwei Dritteln der Länge n des Innengewindes 22 entspricht, und sie wird von einem aus der Außenfläche des Ventilkörpers 14 ringförmig herausgeformten Wulstkörper 28 angeboten. In einer Ringnut 27 der Anschlagfläche 26 lagert ein O-Ring 30, der sich in dargestellter Einbaulage des Reifenventils 12 der inneren Felgenfläche anschmiegt.

Das Außengewinde 24 kämmt mit einer Mehrkantmutter 32, die mit jener Anschlagfläche 26 bzw. deren O-Ring 30 eine Klemmeinrichtung zum Festlegen des Reifenventils 12 bildet.

In das Innengewinde 22 ist eine Spannmutter 34 der Höhe h eingeschraubt, die von einem Axialkanal 36 durchsetzt ist sowie zur Bodenplatte 17 hin einen zylindrischen Aufnahmeraum 38 für eine sich aus diesem heraus konisch verjüngende Druckfeder 40 enthält.

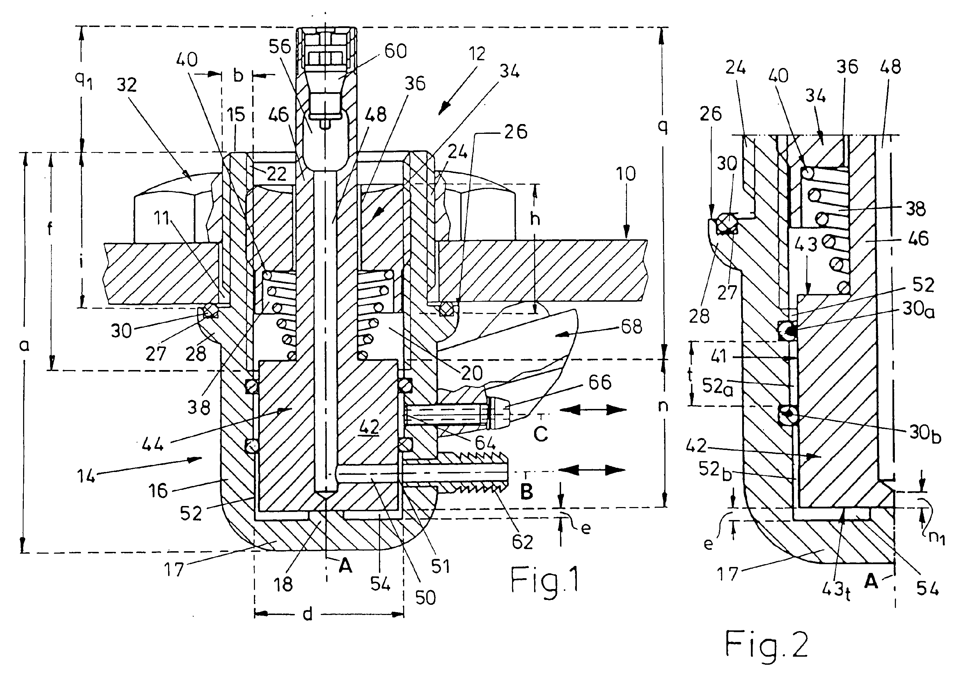

Im unteren Bereich des Ventilinnenraumes 20 ist ein -- angepasst zylindrischer -- Kolbenkörper 42 eines Kolbens oder Schiebers 44 angeordnet, auf dessen Kopffläche 43 jene Spiral- oder Druckfeder 40 lastet, die ein von der Kopffläche 43 aufragendes Axialrohr 46 des Schiebers 44 umfängt. Dieses Axialrohr 46 der Länge q durchgreift den Axialkanal 36 der Spannmutter 34 und ragt in einer Überstandslänge q₁ aus dem Ventilkörper 14 hinaus, dies auch dann, wenn -- in dem in Fig. 1, 2 dargestellten entlüfteten Zustand -- die Bodenfläche 43ₜ des Kolbenkörpers 42 dem Anschlagzapfen 18 der Bodenplatte 17 aufsitzt.

Der in die Zylinderachse A fallende Rohrkanal 48 setzt sich im anschließenden Kolbenkörper 42 fort und endet in geringem Abstand n₁ von der Bodenfläche 43ₜ. Nahe dem Ende des Rohrkanals 48 geht von diesem eine Radialbohrung 50 aus, deren Mündung 51 an der Umfangsfläche 41 des Kolbenkörpers 42 vorgesehen ist. Diese Umfangsfläche 41 begrenzt mit der gegenüberliegenden Innenfläche der Wandung 16 einen Ringraum 52, von dem ein oberer Abschnitt 52ₐ der Länge t durch zwei O-Ringe 30ₐ, 30_{b} dichtend begrenzt ist. Diese Länge t ist kürzer als die halbe Höhe n des Kolbenkörpers 42. Der untere O-Ring 30_{b} begrenzt in Fig. 1, 2 einen unteren Ringraumabschnitt 52_{b}, der in einen den Anschlagzapfen 18 umgebenden Bodenraum 54 übergeht.

Am oberen Ende des Axialrohres 46 ist ein Ventileinsatz 60 vorgesehen, der beispielsweise nach DIN 7757 gestaltet, in einer -- einen Hohlraum 56 bildenden -- Erweiterung des Rohrkanals 48 endet.

Das Reifenventil 12 ist für einen Reifen gedacht, der als Notlaufsystem einen ebenfalls luftbefüllten Sicherheitsschlauch enthält, um bei einem Reifendefekt das Weiterfahren auf diesem Sicherheitssystem zu ermöglichen. Die Befüllung dieser beiden getrennten Luftvolumina soll über das beschriebene Ventil 12 erfolgen.

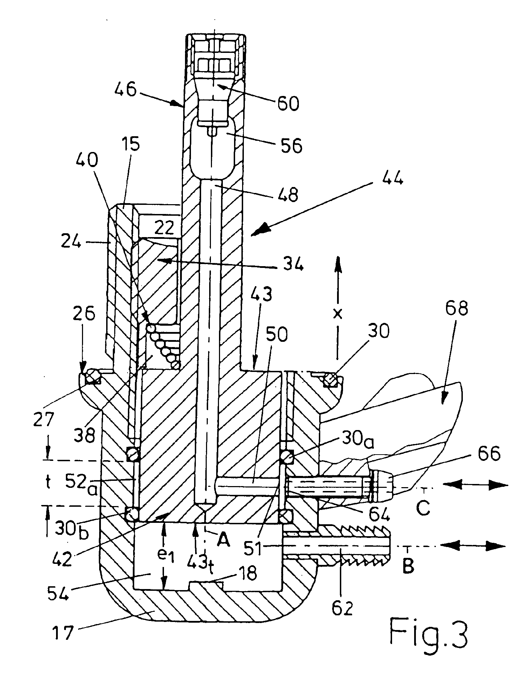

Bei der Erstmontage des Reifens ist dessen Reifenventil 12 in der in Fig. 1 gezeigten Stellung, in welcher die Radialbohrung 50 in der Längsachse B des in Fig. 1 unteren Ausganges als ein Schlauchanschluss 62 für den nicht wiedergegebenen Sicherheitsschlauch verläuft. So ist sichergestellt, dass in jedem Falle zuerst der Sicherheitsschlauch gefüllt wird; der untere Ausgang 62 ist über eine flexible Verbindung an den eigentlichen Sicherheitsschlauch angeschlossen und wird somit beim Aufpumpen gefüllt. Sobald ein gewisser Druck erreicht wird -- bevorzugt beispielsweise 9,5 Bar --, wird der Kolbenkörper 42 gegen die Federkraft in Pfeilrichtung x in eine in Fig. 3 angedeutete obere Lage bewegt, in welcher der Abstand e₁ der Bodenfläche 43ₜ des Kolbenkörpers 42 von der Bodenplatte 17 des Ventilkörpers 14 ein Mehrfaches der Höhe e des Anschlagzapfens 18 misst, und der dem oberen Abschnitt 52ₐ des Ringraumes 52 zugeordnete Luftdurchlass 64 zum Reifen wird geöffnet. In Fig. 1, 3 ist an diesem Luftdurchlass 64 --Längsachse C -- mit einer Hohlschraube 66 die Elektronik 68 zur Reifendrucküberwachung befestigt.

In einem sog. "SuperSingle"-Reifen können beliebige Luftdrücke eingestellt werden. Sobald der Luftdruck in dem Sicherheitsschlauch unter dem vorgegebenen Wert -- in diesem Falle 9,5 Bar -- sinkt, schaltet das Ventil 12 auf die Verbindungslage zum Sicherheitsschlauch, so dass beim Nachfüllen zunächst letzterer auf den vorgeschriebenen Druckwert aufgefüllt wird und erst danach der "SuperSingle" gefüllt zu werden vermag.

## Patentansprüche

1. Reifenventil für die Felge (10) eines Luftreifens an einem Fahrzeug mit einem Ventilkörper (14) aus einem starren Werkstoff sowie mit einem Ventileinsatz (60) und in Abstand zu diesem vorgesehenem Luftauslass (51) eines Strömungsweges (48, 50),
**dadurch gekennzeichnet,**
**dass** in dem Ventilkörper (14) ein den Strömungsweg (48, 50) enthaltender Kolben oder Schieber (44) beweglich lagert und der Strömungsweg einends wahlweise mit einem von zumindest zwei am Ventilkörper vorgesehenen Luftauslässen (62, 64) verbindbar ausgebildet ist.

2. Reifenventil nach Anspruch 1, **dadurch gekennzeichnet, dass** der aus starrem Werkstoff, insbesondere aus einem metallischen Werkstoff, bestehende becherartige Ventilkörper (14) eine Wandung (16) und eine Bodenplatte (17) aufweist.

3. Reifenventil nach Anspruch 1 oder 2, **dadurch gekennzeichnet, dass** der Kolben (44) mit dem Ventileinsatz (60) versehen ist.

4. Reifenventil nach einem der Ansprüche 1 bis 3, **dadurch gekennzeichnet, dass** jeder der Luftauslässe (62, 64) des Ventilkörpers (14) in einem gesondert abgedichteten Bereich (52ₐ, 52_{b}) von dessen Innenraum (20) angeordnet und die Mündung (51) des Strömungsweges (48, 50) wahlweise einem der Bereiche zuzuordnen ist.

5. Reifenventil nach einem der Ansprüche 1 bis 4, **dadurch gekennzeichnet, dass** der Kolben oder Schieber (44) mit dem ihn umgebenden Ventilkörper (14) einen zur Kolbenachse (A) parallelen Spaltraum (52) bildet, der durch quer zur Bewegungsrichtung (x) des Kolbens angeordnete Dichtungselemente (30ₐ, 30_{b}) in Bereiche (52ₐ, 52_{b}) für die Luftauslässe (62, 66) unterteilt ist.

6. Reifenventil nach einem der Ansprüche 1 bis 5, **dadurch gekennzeichnet, dass** die Dichtungselemente in die Innenfläche der Wandung (16) des Ventilkörpers (14) in Abstand (t) zueinander eingefügte und von dieser abragende O-Ringe (30ₐ, 30_{b}) sind, denen die die Mündung (51) des Strömungsweges (48, 50) enthaltende Umfangsfläche (41) des Kolbens (44) tangierend entlangführbar zugeordnet ist.

7. Reifenventil nach einem der Ansprüche 2 bis 6, **dadurch gekennzeichnet, dass** die Wandung (16) des Ventilkörpers (14) querschnittlich oval oder zylindrisch und die Form zumindest des den Dichtungselmenten (30ₐ, 30_{b}) zugeordneten Abschnitts (42) des Kolbens (44) diesem Querschnitt angepasst ist.

8. Reifenventil nach einem der Ansprüche 1 bis 7, **dadurch gekennzeichnet, dass** der Kolben (44) einen dem Querschnitt des Ventilkörpers (14) angepassten Kolbenkörper (42) aufweist sowie ein von diesem axial abragendes Axialrohr (46) kleineren Querschnittes, und/oder dass der Strömungsweg des Kolbens (44) durch den Innenraum des Axialrohres (46) bzw. einen sich im Kolbenkörper (42) fortsetzenden und zu dessen Bodenfläche (43ₜ) hin geschlossenen axialen Rohrkanal (48) des Axialrohres sowie einer von diesem Rohrinnenraum oder Rohrkanal ausgehenden Radialbohrung (50) gebildet ist.

9. Reifenventil nach Anspruch 8, **dadurch gekennzeichnet, dass** am freien Ende des Axialrohres (48) der Ventileinsatz (60) angeordnet ist.

10. Reifenventil nach einem der Ansprüche 2 bis 9, **dadurch gekennzeichnet, dass** von der mit der Wandung (16) des Ventilkörpers (14) einstückigen Bodenplatte (17) innenseitig wenigstens ein Anschlagorgan (18) für eine Bodenfläche (43ₜ) des Kolbens (44) bzw. des Kolbenkörpers (42) aufragt, wobei gegebenenfalls dass von der Bodenplatte (17) aufragenden Anschlagorgan (18) eine kurze Höhe (e)aufweist.

11. Reifenventil nach einem der Ansprüche 4 bis 10, **dadurch gekennzeichnet, dass** in einer Endstellung, in der die Bodenfläche (43ₜ) des Kolbens (44) bzw. des Kolbenkörpers (42) dem Anschlagorgan (18) aufsitzt, der von der Bodenfläche und der Bodenplatte (17) begrenzte Bodenraum (54) mit dem anschließenden Bereich (52_{b}) des Spaltraums (52) eine Einheit bildet.

12. Reifenventil nach einem der Ansprüche 8 bis 11, **dadurch gekennzeichnet, dass** in Endstellung des Kolbens (44) bzw. des Kolbenkörpers (42) die Mündung (51) des Strömungsweges aus Rohrkanal (48) und Radialbohrung (50) mit einem bodennahen Luftauslass oder Ausgang (62) fluchtet, der an einen Sicherheitsschlauch angeschlossen ist.

13. Reifenventil nach einem der Ansprüche 1 bis 12, **dadurch gekennzeichnet, dass** bei einer anderen Stellung des Kolbens (44) der Kolbenkörper (42) sich in Abstand zum Anschlagorgan (18) befindet und die Mündung (51) des Strömungsweges aus Rohrkanal (48) und Radialbohrung (50) in einem anderen Bereich (52ₐ) des Spaltraumes (52) einem Luftdurchlass (64) gegenüberliegt, an den der Reifeninnenraum angeschlossen ist, wobei gegebenenfalls an den Luftdurchlass (64) eine Einrichtung (58) zur Reifendrucküberwachung angeschlossen ist.

14. Reifenventil nach einem der Ansprüche 1 bis 13, **dadurch gekennzeichnet, dass** auf der Kopffläche (43) des Kolbenkörpers (42) ein Kraftspeicher (40) aufsitzt, der sich andernends an einer feststehenden Gegenfläche (34) abstützt, wobei gegebenenfalls als Kraftspeicher eine als Spiralfeder oder als Schraubenfeder ausgebildete Druckfeder (40) das Axialrohr (46) umgibt und andernends in einem Aufnahmeraum (38) einer Spannmutter (34) lagert.

15. Reifenventil nach Anspruch 14, **dadurch gekennzeichnet, dass** der Kraftspeicher eine sich vom Kolbenkörper (42) weg konisch erweiternde Spiralfeder ist.

16. Reifenventil nach Anspruch 4 oder 15, **dadurch gekennzeichnet, dass** die Gegenfläche bzw. die Spannmutter (34) durch ein Innengewinde (22) des Ventilkörpers (14) in dessen Innenraum (20) gehalten ist, wobei gegebenenfalls der Abstand der Spannmutter (34) von der Bodenplatte (17) des Ventilkörpers (14) einstellbar ausgebildet ist.

17. Bodenplatte nach einem der Ansprüche 1 bis 16, **gekennzeichnet durch** ein Außengewinde (24) des Ventilkörpers (14) für eine Außenmutter (32), die mit einem radial abragenden Wulstkörper (28) des Ventilkörpers eine Klemmeinrichtung zu dessen Festlegung an der Felge (10) bildet, wobei gegebenenfalls eine radiale Anschlagfläche (26) des Wulstkörpers (28) vorgesehen ist, die ein zur Außenmutter (32) gerichtetes Dichtelement, bevorzugt einen O-Ring (30), enthält.
